# EUROPÄISCHE PATENTANMELDUNG

(11) **EP 2 868 816 A1**
(43) Veröffentlichungstag der Anmeldung: **06.05.2015**
(21) Anmeldenummer: 13191028.3
(22) Anmeldetag: 31.10.2013
(51) Int. Cl.: E03B 3/03, E03C 1/288, F16K 15/03

(54) **Überlaufsiphon und Regenwassertank**

(71) Anmelder: Otto Graf GmbH Kunststofferzeugnisse, 79331 Teningen (DE)
(72) Erfinder: Graf, Otto P., 79331 Teningen (DE)
(74) Vertreter: Grünecker Patent- und Rechtsanwälte PartG mbB

(57) **Zusammenfassung**

In einem Überlaufsiphon (1) mit im Wesentlichen parallelen und vertikalen Einlauf- und Ablaufrohren (2, 6) vorbestimmter Nennweite, die über einen U-Bogen (10) verbunden sind, wobei vom Ablaufrohr (6) ein im Wesentlichen horizontaler Auslauf (8) abzweigt, ist eine in Strömungsrichtung vom Ablaufrohr (6) zum Einlaufrohr (2) selbsttätig sperrende Rückstauklappe (24) integriert. In einem Regenwassertank mit dem Überlaufsiphon (1) im Tankdom (38) befindet sich die in den Überlaufsiphon (1) integrierte Rückstauklappe (24) in Montierlage des Überlaufsiphons (1) im Innenbereich des Tankdoms (38).

## Beschreibung

Die Erfindung betrifft einen Überlaufsiphon gemäß Oberbegriff des Patentanspruchs 1 sowie einen Regenwassertank gemäß Oberbegriff des Patentanspruchs 14.

Aus dem Prospekt R33 "Graf Regenwassernutzung mit System", Seiten 9 und 71 (Internet: www.graf-online.de) sind Überlaufsiphone beispielsweise der Nennweite DN100 bekannt, von denen jeweils einer in Verbindung mit einem Filter im Tankdom eines Regenwassertanks, beispielsweise des Typs Carat, eingebaut wird. Der Überlaufsiphon hat neben einer Geruchverschlussfunktion die Aufgabe, abgezweigtes, gesammeltes und gegebenenfalls vorgefiltertes Regenwasser bei vollem Regenwassertank aus diesem und überschüssiges Regenwasser zum Beispiel aus dem Filter in ein weiterführendes Kanalsystem zu leiten. Der Überlaufsiphon kann auch ohne Filter im Tankdom dort installiert sein, wenn Regenwasser an anderer Stelle gefiltert wird. Da Regenwassertanks zur systematischen Regenwassernutzung meist als Erdtanks verbaut sind, befindet sich der Überlaufsiphon oftmals unterhalb der sogenannten Rückstauebene, bis zu der im Falle eines Rückstaus, z.B. aufgrund starken Regenwasseranfalls verschmutztes Kanalwasser aus dem Kanalsystem zurück und hoch gedrückt wird. Verschmutztes Kanalwasser gelangt dann in großer Menge über den Überlaufsiphon in den Regenwassertank und verschmutzt das darin enthaltene Wasser. Um dies zu verhindern, gibt es Installationskonzepte, gemäß denen zwischen dem Erdtank und dem Kanalsystem ein Schacht vorgesehen wird, in welchem unterhalb der Rückstauebene ein abwassertechnisches Gerät mit einer Rückstauklappe oder einem Rückstauverschluss enthalten ist, die bzw. der im Falle eines Rückstaus schließt oder geschlossen wird. Der zusätzliche Schacht mit dem abwassertechnischen Gerät ist jedoch teuer, benötigt Platz und zusätzliche Installationsarbeiten.

Der Erfindung liegt die Aufgabe zugrunde, einen Überlaufsiphon sowie einen Regenwassertank anzugeben, bei denen eine Verschmutzung abgezweigten und gegebenenfalls filtrierten Wassers im Falle eines Rückstaus aus dem Kanalsystem auf kosten- und installationsgünstige Weise vermieden wird.

Die gestellte Aufgabe wird mit den Merkmalen des Patentanspruchs 1 und des Patentanspruchs 14 gelöst.

Die in den Überlaufsiphon integrierte Rückstauklappe schließt im Falle einer Kanal-Rückstausituation selbsttätig und vermeidet, dass verschmutztes Kanalwasser durch den Überlaufsiphon zurückfließen kann. Verschmutztes Kanalwasser kann bei einem Rückstau zwar den Überlaufsiphon erreichen, diesen jedoch nicht bzw. nicht in kritischen Mengen durchsetzen. Liegt keine Kanal-Rückstausituation vor, erlaubt die Rückstauklappe das jederzeitige und im Wesentlichen unbehinderte Abströmen von Wasser durch den Überlaufsiphon. Ein zusätzlicher Schacht mit einem abwassertechnischen Gerät mit einem Rückstauverschluss oder einer Rückstauklappe ist somit entbehrlich.

Im Regenwassertank kann bei einer Kanal-Rückstausituation zwar Kanalwasser bis zu dem Regenwassertank vordringen, jedoch im Regenwassertank gereinigtes gespeichertes Wasser nicht verschmutzen, da dann die Rückstauklappe im Bereich des Tankdoms absperrt, wohingegen im Normalbetrieb ohne Rückstau überschüssiges Wasser zumindest aus dem Regenwassertank und/oder einer gegebenenfalls vorgesehenen Filtereinrichtung ungehindert in das Kanalsystem abfließt. Der Auslauf des Überlaufsiphons im Tankdom kann direkt mit dem weiterführenden Kanalsystem oder einem Mischwasserkanal verbunden sein. Obwohl kein separater Schacht mit einer Rückstauvorrichtung benötigt wird, ist hohe Sicherheit gegen eine rückstaubedingte Verschmutzung des gespeicherten Wassers im Regenwassertank erzielt. Dabei wird gewinnbringend der zwar beschränkte, aber ausreichende Einbauraum im Tankdom des Regenwassertanks genutzt, um dort dem Überlaufsiphon ohne nennenswerten baulichen und installationstechnischen Mehraufwand die zusätzliche Aufgabe der selbsttätigen Absperrung bei einer Kanal-Rückstausituation zuzuweisen.

In einer zweckmäßigen Ausführungsform weist der Überlaufsiphon eine verschließbare Montageöffnung für die Rückstauklappe auf. Die Montageöffnung kann durch einen abnehmbaren Deckel verschlossen sein und ermöglicht nicht nur die Montage der Rückstauklappe im Überlaufsiphon, sondern gegebenenfalls auch jederzeitige Wartungs- oder Reinigungsarbeiten. Die Rückstauklappe ist schwenkbar an einem Einbauteil angebracht, der in einer der Nennweite entsprechenden Größe einen Dichtsitz für die Rückstauklappe aufweist. Ferner ist im Überlaufsiphon eine mit der Montageöffnung zumindest im Wesentlichen fluchtende Fassung zum Einsetzen und Abdichten des Einbauteils vorgesehen. Die Montageöffnung hat eine Größe zumindest entsprechend den Abmessungen des Einbauteils, das einfach eingeschoben und in der Fassung fixiert ist.

Eine besonders zweckmäßige Ausführungsform des Überlaufsiphons zeichnet sich dadurch aus, dass die Rückstauklappe im U-Bogen zwischen den Einlauf- und Ablaufrohren sitzt und die Achse der Fassung sowie der Montageöffnung in etwa horizontal angeordnet sind. Dieses Konzept ist deshalb von erheblichem Vorteil, weil die Unterbringung der Rückstauklappe im U-Bogen es ermöglicht, die Abmessungen des Überlaufsiphons zumindest in dem Bereich, in welchem dieser in der Tankdomöffnung untergebracht wird, trotz der erforderlichen Nennweite optimal klein zu halten. Im Tankdom bzw. der Tankdomöffnung eines Regenwassertanks ist nämlich in Durchmesserrichtung meist relativ wenig Platz für den Überlaufsiphon verfügbar, speziell, wenn im Tankdom auch eine Filtervorrichtung untergebracht wird.

Bei alternativen Ausführungsformen des Überlaufsiphons sitzt die Rückstauklappe im Ablaufrohr und sind die Fassung und die Montageöffnung zumindest in etwa vertikal angeordnet, wobei die Montageöffnung oben oder unten am Ablaufrohr vorgesehen sein kann. Diese alternativen Ausführungsformen können zur besseren Handhabung speziell dann zweckmäßig sein, wenn in der Tankdomöffnung eines Regenwassertanks in Durchmesserrichtung genügend Platz für die Installation des Überlaufsiphons verfügbar ist, weil wegen des kreisrunden Ablaufrohres mit der darin untergebrachten Rückstauklappe die Abmessungen des Überlaufsiphons in Durchmesserrichtung der Tankdomöffnung etwas größer sein können als bei Unterbringung der Rückstauklappe in U-Bogen. Allerdings ist es auch möglich, bei den Ausführungsformen mit im Ablaufrohr angeordneter Rückstauklappe, Einbauraum in Durchmesserrichtung einzusparen, wenn zum Beispiel die Rückstauklappe wie auch das Ablaufrohr oval oder rechteckig sind, und zwar mit einer längeren Oval- oder Rechteckachse, die zumindest im Wesentlichen senkrecht zur Achse des Auslaufs ist. Dies gilt auch für das Einlaufrohr.

Um bewusst den Einbauraum des Überlaufsiphons in Durchmesserrichtung des Tankdoms zu minimieren, kann zweckmäßig zumindest das Ablaufrohr, vorzugsweise auch das Einlaufrohr, zumindest über einen axialen Dom-Einpassabschnitt einen annähernd ovalen oder rechteckigen Rohrquerschnitt aufweisen, dessen längere Oval- oder Rechteckachse zur Achse des Auslaufs im Wesentlichen senkrecht ist. Dieses Konzept ist speziell zweckmäßig bei Anordnung der Rückstauklappe im U-Bogen, die dort kreisrunde Form haben kann. Auf diese Weise lässt sich beispielsweise der in Durchmesserrichtung des Tankdoms gesehene Abstand zwischen der Achse des Einlaufrohrs und der Außenkontur des Ablaufrohrs im Dom-Einpassabschnitt des Überlaufsiphons auf nur etwa das 1,6-fache der Nennweite eines kreisrunden Rohres beschränken.

In der Ausführungsform, beispielsweise mit der im U-Bogen untergebrachten Rückstauklappe, kann der Einbauteil einen Rohrstutzen, vorzugsweise mit einer zur Montageöffnung weisenden Aufweitung sein, ist der Dichtsitz kreisrund und senkrecht zur Achse des Rohrstutzens orientiert, und wird die Rückstauklappe in Montierlage des Einbauteils im Überlaufsiphon unten am Rohrstutzen schwenkbar gelagert, so dass sie in aufgeschwenktem Zustand keinen nennenswerten Drosseleffekt oder Absperreffekt für in das Ablaufrohr fließendes Wasser erzeugt.

Dabei kann zwischen der Fassung und dem Rohrstutzen in einer Ausführungsform wenigstens eine Dichtung vorgesehen sein, um die notwendige Dichtheit sicherzustellen.

Besonders zweckmäßig ist jedoch ein dichtungsloses Montagekonzept für beispielsweise den Einbauteil mit der im U-Bogen positionierten Rückstauklappe, bei welchem der Rohrstutzen dichtungsfrei durch einen Schrumpfsitz in der Fassung abgedichtet festgelegt ist, vorzugsweise durch Montage des kalten oder Raumtemperatur aufweisenden Einbauteils in der Fassung des erwärmten oder produktionsbedingt restwarmen Überlaufsiphons. Dies wird beispielsweise so durchgeführt, dass der Überlaufsiphon, der ein Kunststoffformteil ist, direkt nach der Entformung in noch heißem Zustand mit dem Einbauteil bestückt wird und beim Abkühlen die Fassung schrumpft, bis der Einbauteil bzw. dessen Rohrstutzen dicht positioniert ist.

Bei der Ausführungsform, beispielsweise mit der im U-Bogen positionierten Rückstauklappe, kann es ferner vorteilhaft sein, wenn an der Rückstauklappe wenigstens ein Auftriebskörper montiert ist, vorzugsweise ein auf einen Dorn der Rückstauklappe auf der Sperrseite aufgesteckter Styroporblock, oder ein anderes schwimmerähnliches Objekt. Die Rückstauklappe, die ebenfalls zweckmäßig ein Kunststoffformteil ist, schwimmt zwar ohnedies relativ leicht auf, wird dann aber durch den wenigstens einen Auftriebskörper unterstützt, so dass sie bei Rückstau und/oder fast vollem Ablaufrohr in der Schließstellung am Dichtsitz ist und bei zunehmendem Rücklaufdruck die Schließwirkung noch verstärkt wird. Es kann in der Absperrstellung der Rückstauklappe zwar aus dem Regenwassertank oder der Filtervorrichtung kein Wasser mehr in die Kanalisation abströmen; jedoch wird eine Verschmutzung des gespeicherten Wassers im Tank durch zurückgedrücktes Kanalwasser sicher ausgeschlossen.

Im Übrigen kann die Rückstauklappe eben und kreisrund sein und auf der Schließseite zumindest einen Dorn aufweisen. Dieser Dorn ist zweckmäßig, ausgehend von der Schwenkachse der Rückstauklappe, jenseits der Mitte der Rückstauklappe positioniert, so dass der Auftriebskörper mit günstigem Hebelarm wirkt.

Bei Ausführungsformen mit im Ablaufrohr positionierter Rückstauklappe kann der Einbauteil ein gerade durchgehender Rohrstutzen mit gegenüber der Achse des Rohrstutzens abgeschrägtem, den Dichtsitz bildenden Ende sein. Die Rückstauklappe ist zum Beispiel entsprechend der elliptischen Form des Dichtsitzes oval oder elliptisch und in Montierlage des Einbauteils an der zum Einlaufrohr weitenden Seite des Rohrstutzens schwenkbar gelagert, so dass sie in aufgeschwenkter Position keinen nennenswerten Drosseleffekt erzeugt. Am dem Dichtsitz abgewandten, in der Fassung fixierten Ende des Rohrstutzens kann eine Lippendichtung montiert sein, die den dichten und festen Sitz des Einbauteils in der Fassung gewährleistet. Gegebenenfalls kann sogar ein in die Lippendichtung eingeschobener Spreizring vorgesehen werden, der die Lippendichtung verspannt und beim Einbau des Einbauteils durch die Montieröffnung eingeschoben wird. Alternativ kann auch hier der Rohrstutzen durch einen Schrumpfsitz in der Fassung festgelegt werden, wobei, wie erwähnt, die Schrumpfung des Überlaufsiphons beim Abkühlen für diesen Zweck genutzt wird und eine Dichtung entfallen kann.

Bei im Ablaufrohr installierter Rückstauklappe kann diese wannenförmig ausgebildet sein, vorzugsweise mit zur Sperrseite oder dem Auslauf weisender konkaver Wannenhohlseite. Durch die Wannenform kann sich in der Rückstauklappe Wasser sammeln, dessen Gewicht die Rückstauklappe zur Schließstellung drängt, beispielsweise sobald sich eine Rückstausituation abzeichnet. Eine umgekehrte Bauweise der Rückstauklappe mit zum Auslauf konvexer Oberseite ist ebenfalls denkbar. Unter zunehmendem Rückstaudruck kann die Rückstauklappe etwas flach gedrückt werden und die Schließstellung verstärken, und sich nach einem Rückstau entspannen und dabei gut vom Dichtsitz ablösen.

In jedem Fall ist es dabei zweckmäßig, entweder am Dichtsitz und/oder an der Rückstauklappe eine elastische Dichtung vorzusehen, beispielsweise einen im Querschnitt C-förmigen Dichtungsring, der auf einen Umfangsflansch der Rückstauklappe aufgeknüpft ist.

Bei im U-Bogen installierter Rückstauklappe kann es zweckmäßig sein, am unteren Ende des Ablaufrohres angrenzend an den Dom-Einpassabschnitt des Überlaufsiphons einen gegenüber der Kontur des Ablaufrohres vorspringenden Bewegungsraum für die Rückstauklappe vorzusehen, damit diese in der vollen Öffnungsstellung möglichst wenig Drosselung erzeugt.

Die Komponenten des Überlaufsiphons sind im Übrigen zweckmäßigerweise Kunststoffformteile, die kostengünstig und maßgenau und formgetreu in Großserie hergestellt und leicht zusammengebaut werden können.

Bei einer zweckmäßigen Ausführungsform des Regenwassertanks ist die Rückstauklappe im U-Bogen des Überlaufsiphons und somit unterhalb der Tankdomöffnung installiert, wobei zumindest das Ablaufrohr, vorzugsweise auch das Einlaufrohr, in einem in Hochrichtung begrenzten Tankdom-Einpassabschnitt des Überlaufsiphons einen annähernd ovalen oder rechteckigen Querschnitt mit senkrecht zur Achse des Kanal-Auslaufs orientierter längerer Oval- oder Rechtecksachse aufweisen. Auf diese Weise beansprucht der Überlaufsiphon einen optimal kleinen Einbauraum in Durchmesserrichtung der Tankdomöffnung, in der gegebenenfalls weitere Ausrüstung zu installieren sind.

Ausführungsformen des Erfindungsgegenstandes werden anhand der Zeichnung erläutert. Es zeigen:
- Fig. 1: eine Perspektivdarstellung eines Überlaufsiphons,
- Fig. 2: eine perspektivische Explosionsdarstellung des Überlaufsiphons von Fig. 1,
- Fig. 3: einen Vertikalschnitt des Überlaufsiphons der Fig. 1 mit in voller Öffnungsstellung gezeigter Rückstauklappe,
- Fig. 4: einen Vertikalschnitt des Überlaufsiphons der Fig. 1 mit der Rückstauklappe in Schließstellung,
- Fig. 5: einen vergrößerten Teil eines Vertikalschnitts entsprechend Fig. 4,
- Fig. 6: einen Vertikalschnitt einer weiteren Ausführungsform des Überlaufsiphons mit der Rückstauklappe in Schließstellung,
- Fig. 7: eine weitere Ausführungsform des Überlaufsiphons mit der Rückstauklappe in Schließstellung und einem eingesteckten Rohrbogen,
- Fig. 8: einen Horizontalschnitt des Überlaufsiphons von Fig. 1, und
- Fig. 9: eine Perspektivansicht des Überlaufsiphons von Fig. 1 in Montierlage im Tankdom eines Regenwassertanks.

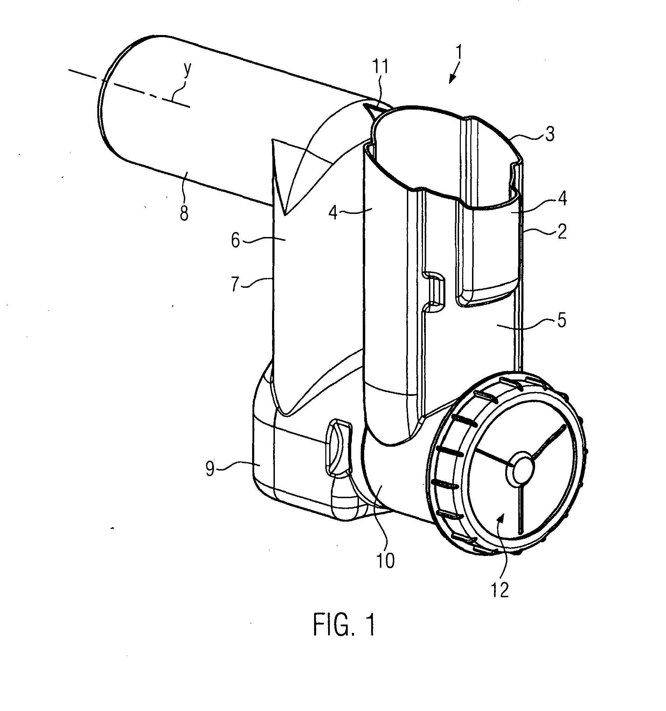

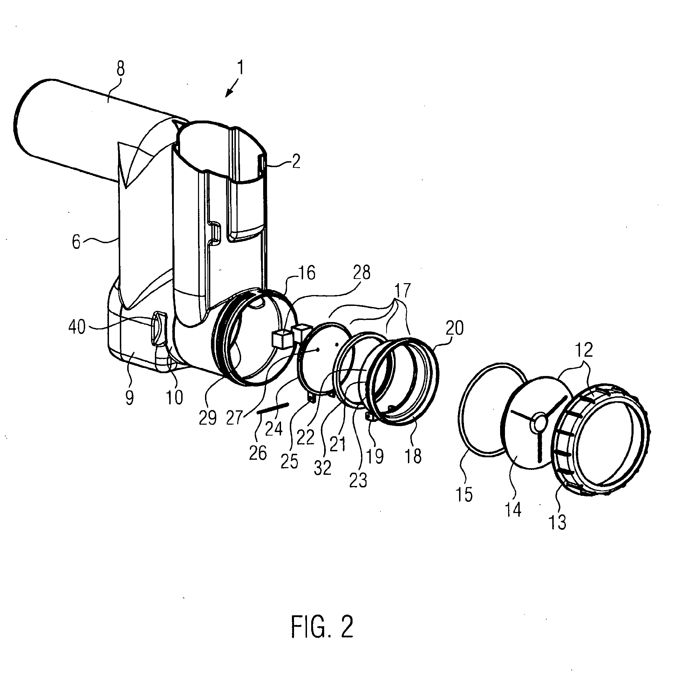

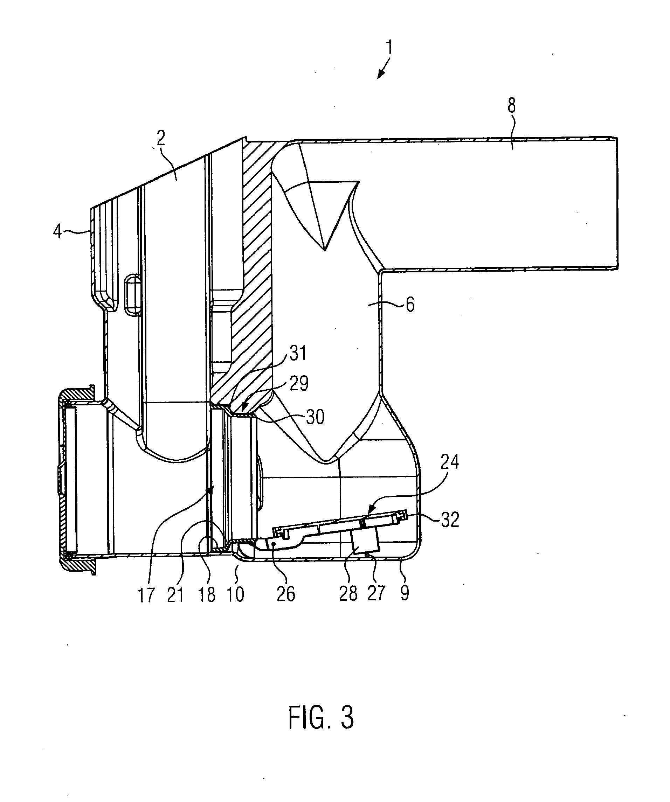

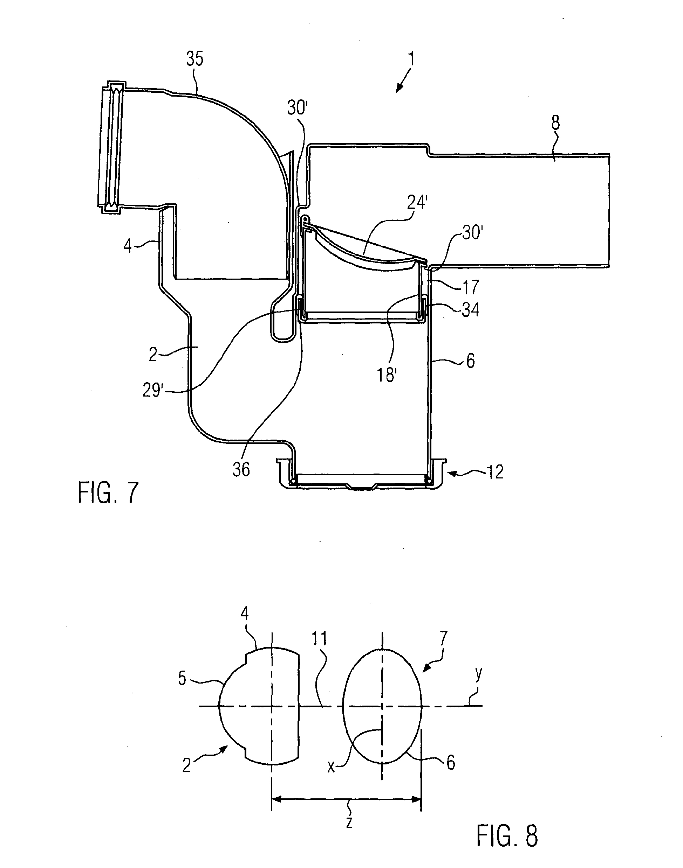

Eine erste Ausführungsform eines Überlaufsiphons 1 wird anhand der Fig. 1 bis 5 und 8 erläutert. Dieser Überlaufsiphon 1 weist ein im Wesentlichen vertikales Einlaufrohr 2 auf, dessen oberes Ende 3 zum Beispiel abgeschrägt ist, und das über den Umfang verteilt mehrere gegenüber einer Kreislinie nach außen vorspringende Erker 4 besitzt, von denen einer (in Fig. 1, rechts) oberhalb eines Tankdom-Einpassabschnitts 5 des Einlaufrohrs 2 endet. Im Tankdom-Einpassabschnitt 5 ist der der Nennweite entsprechende Querschnitt des Einlaufrohrs (siehe Fig. 8) annähernd oval mit einer längeren Ovalachse, die in den Fig. 2 und 3 senkrecht zur Zeichnungsebene orientiert ist. Alternativ kann das Einlaufrohr 2, abgesehen von den Erkern 4, kreisrunden Querschnitt haben.

Das untere Ende des Einlaufrohres 2 ist über einen U-Bogen 10 mit dem unteren Ende eines ebenfalls weitgehend vertikalen und zum Einlaufrohr 2 parallelen Ablaufrohres 6 verbunden, das am oberen Ende geschlossen ist, und von dem ein im Wesentlichen horizontaler Auslauf 8 (Auslauf-Achse Y) abzweigt, der an ein weiterführendes Kanalsystem oder einen Mischwasserkanal (nicht gezeigt) angeschlossen wird.

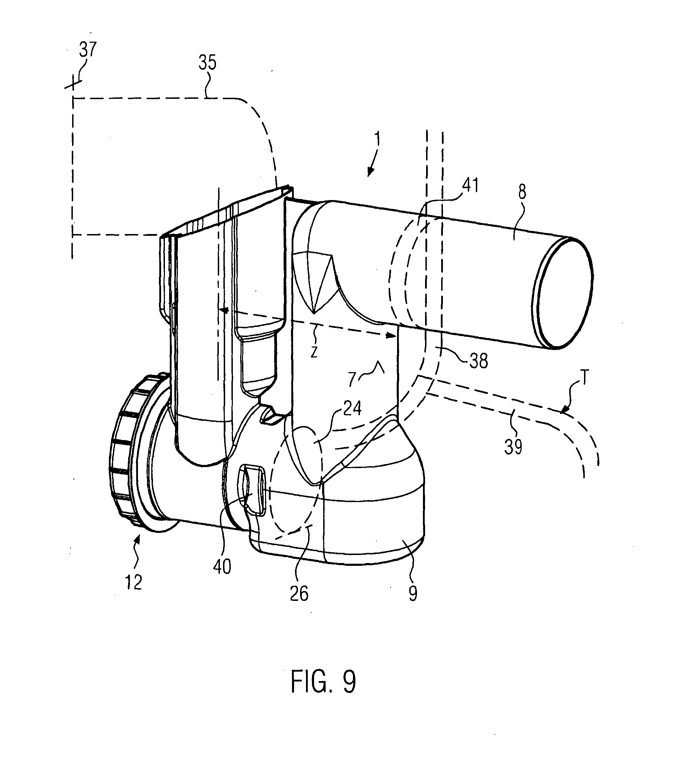

Gemäß Fig. 8 ist auch der Querschnitt des Ablaufrohrs 6 in einem Tankdom-Einpassabschnitt 7 oval, mit längerer Ovalachse senkrecht zur Achse Y des Auslaufs 8. Zwischen dem Einlauf- und dem Ablaufrohr 2, 6 kann aus Stabilitätsgründen ein Steg 11 geformt sein. Der Überlaufsiphon 1 ist als solcher ein einstückiger Kunststoffformteil. Die ovalen (oder alternativ rechteckigen) Querschnitte in den Tankdom-Einpassabschnitten 5, 7 der Ein- und Ablaufrohre 2,6 führen gemäß Fig. 8 dazu, dass der Abstand Z zwischen der Achse des Einlaufrohres 2 und dem Außenumfang des Ablaufrohres 6 optimal kurz ist, beispielsweise nur etwa das 1,6-fache des Durchmessers eines Vollkreises entsprechend der Nennweite beträgt, was im Hinblick auf die Montage des Überlaufsiphons in einem Tankdom (später anhand Fig. 9 erläutert) vorteilhaft ist. Die längere Ovalachse des Ablaufrohres 6 ist mit X bezeichnet und liegt, wie erwähnt, senkrecht zur Achse Y des Auslaufs 8. Alternativ könnte das Ablaufrohr 6 kreisrunden Querschnitt haben.

In den Überlaufsiphon 1 ist eine Rückstauklappe integriert, die in Fig. 1 nicht sichtbar, jedoch in den Fig. 2 bis 5 mit den Bezugszeichen 24 hervorgehoben ist.

Fig. 2 verdeutlicht in der perspektivischen Explosionsdarstellung das einstückige Gehäuse des Überlaufsiphons 1, der am unteren Ende des Einlaufrohres 2 eine hier kreisrunde Montieröffnung 16, beispielsweise mit einem Außengewinde, aufweist, die mit einer im U-Bogen 10 vorgesehenen Fassung 29 fluchtet und in etwa parallel zum Auslauf 8 ist. Die Montieröffnung 16 kann durch einen abnehmbaren Deckel 12 verschlossen werden, der beispielsweise einen gerändelten Schraubring 13, eine kreisrunde Scheibe 14 und eine Dichtung 15 umfasst (oder einstückig ist) und nach Montage der Rückstauklappe 24 im Überlaufsiphon 1 die Montieröffnung 16 dicht verschließt. Die Rückstauklappe 24 hat in dieser Ausführungsform kreisrunde Form, ist eben und weist an der Unterseite zwei Lagerböcke 25 auf, durch die ein die Schwenkachse der Rückstauklappe 24 definierender Stift 26 einsteckbar ist. Die Rückstauklappe 24 ist Teil eines Einbauteils 17, der als Rohrstutzen 18 mit einer endseitigen Aufweitung 20, einer Umfangsschulter 21 und einem Einsteckabschnitt 22 ausgebildet ist, wobei dort an der Unterseite Lagerböcke 19 für den Stift 26 angeformt sein können.

Der Einbauteil 17 lässt sich durch die Montieröffnung 16 in die Fassung 19 des Überlaufsiphons 1 einschieben und darin beispielsweise mittels einer nicht gezeigten Dichtung abdichten.

Am Rohrstutzen 18 kann außen in Umfangsrichtung gegebenenfalls wenigstens eine verlaufende Rippe 23 geformt sein, mit der sich der Rohrstutzen 20 in der Fassung 29 verkrallen kann und ohne Dichtung z.B. mit einem Schrumpfsitz dicht festgelegt wird. Dies wird beispielsweise dadurch erzielt, dass das Gehäuse des Überlaufsiphons 1 erwärmt wird oder noch durch Produktionsrestwärme heiß ist, während der Rohrstutzen 18 mit der daran montierten Rückstauklappe 24 mit Ringdichtung 32 in kaltem Zustand in die Fassung eingeschoben wird, und die Schrumpfung des sich abkühlenden Gehäuses benutzt wird, den Rohrstutzen 18 dicht und fest zu positionieren. Hier könnten am Einbauteil 17 und/oder in der Fassung 29 alternativ angeformte Zähne oder Warzen vorgesehen sein.

Bei dieser Ausführungsform sind als Option an der Rückstauklappe 24 an deren Schließseite zwei vorspringende Dorne 27 vorgesehen, auf die Auftriebskörper 28, z. B. Styroporblöcke, aufgesteckt werden. Die Dorne 27 befinden sich, ausgehend vom Stift 26 jenseits der Mitte der Rückstauklappe 24. Sobald der Einbauteil 17 installiert ist, wird die Montieröffnung 16 durch den Deckel 12 dicht verschlossen. Der Überlaufsiphon 1 ist dann einsatzbereit.

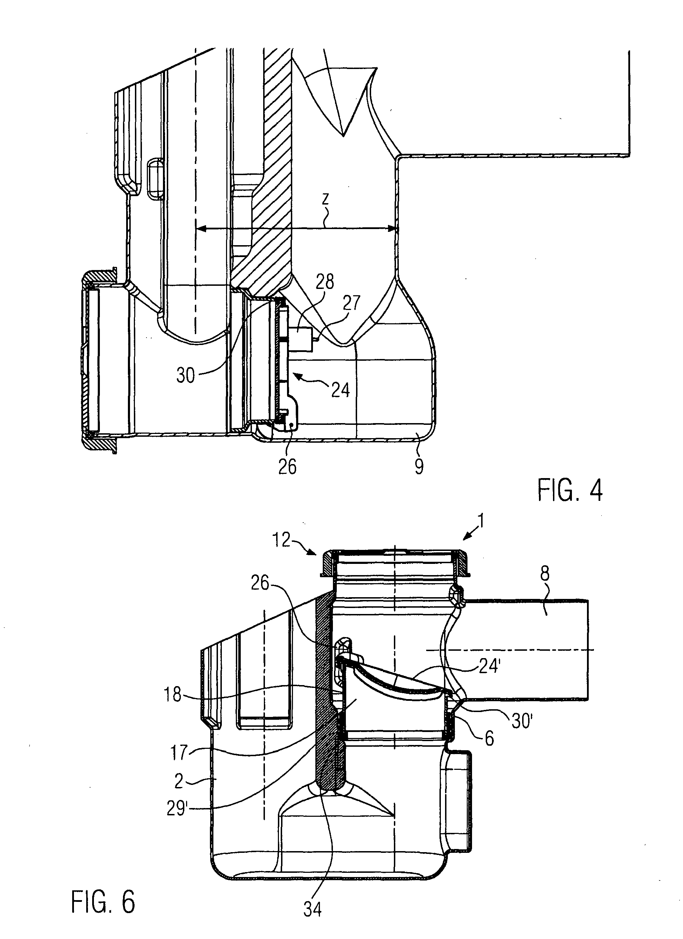

Fig. 3 verdeutlicht die Fassung 29 im Bereich des U-Bogens 10 unten zwischen dem Einlaufrohr 2 und dem Ablaufrohr 6, wobei in der Fassung 29 eine konische Schulter 31 geformt ist, gegen die die Schulter 21 des Rohrstutzens 18 angelegt wird, so dass der Sitz des Rohrstutzens 18 axial eindeutig definiert ist. In Fig. 3 ist die Rückstauklappe 24 in ihrer vollen Öffnungsstellung im Ausweichraum 9 gezeigt, wobei beispielsweise die Dorne 27 auf dem Grund des Ausweichraums aufstehen, solange sich kein Wasser im Ausweichraum 9 befindet. Am kleindurchmessrigen Ende des Einsteckabschnitt 22 des Rohrstutzens 18 ist ein hier kreisrunder Dichtsitz 30 geformt, der mit der auf die Rückstauklappe 24 aufgeknüpften Ringdichtung 32 zusammenwirkt, wenn die Rückstauklappe 24 ihre in Fig. 4 gezeigte Schließstellung einnimmt, optional unterstützt durch die Auftriebswirkung der Auftriebskörper 28. Fig. 4 verdeutlicht auch den geringen Abstand (Z) (siehe Fig. 8 und 9) zwischen der Achse des Einlaufrohrs und der Außenkontur des Ablaufrohres 2 im Bereich der Tankdom-Einpassabschnitte 5, 7.

Um den Einbauteil 17 in einer vorbestimmten Drehposition festzulegen, könnte der Bereich bei der Fassung 29 im Gehäuse des Überlaufsiphons 1 gemäß beispielsweise Fig. 2 Einbuchtungen 40 oder eine Einformung zum Eintritt der Lagerböcke 19 aufweisen.

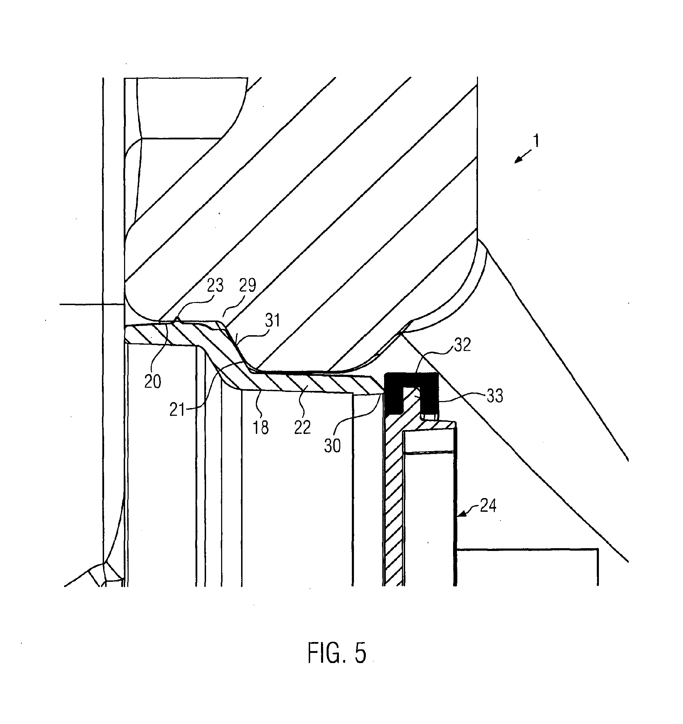

Fig. 5 verdeutlicht den Eingriff der Rippe oder allgemein von Verzahnungen 23, z.B. am Einbauteil 17 in der Fassung 29, und die Zusammenarbeit zwischen dem Dichtsitz 30 und der Ringdichtung 32, die hier auf einen Ringflansch 33 der in dieser Ausführungsform ebenen Rückstauklappe 24 aufgeknüpft ist.

### Funktion:

Wenn beispielsweise der Wasserspiegel, z.B. in einem Regenwassertank T wie in Fig. 9, bis zur Kante des abgeschrägten Endes des Einlaufrohres 2 oder höher steigt, läuft Wasser über die Erker 4 in das Einlaufrohr 2, durch den U-Bogen 10 in das Ablaufrohr 6 und durch den Auslauf 8 in das Kanalisationssystem. Dabei beginnt die Rückstauklappe 24 aufzuschwimmen, ohne jedoch das Einströmen in das Ablaufrohr 6 zu behindern. Steigt der Wasserspiegel im Ablaufrohr 6 bis auf die Höhe der Unterkante des Auslaufes 8, schwimmt die Rückstauklappe 24 gegebenenfalls weiter auf, bis sie schließlich, falls keine Durchströmung mehr stattfindet, eine Schließstellung am Dichtsitz 30 einnimmt. Weiterhin nachströmendes Wasser öffnet die Rückstauklappe 24 wieder aufgrund der Strömungsdynamik, so dass die Rückstauklappe 24 keinen Einfluss auf die Strömung nimmt.

Tritt eine Rückstausituation auf, bei der Wasser auch den Auslauf 8 füllt und bei in der Schließstellung gemäß Fig. 4 befindlicher Rückstauklappe 24 der Druck im Ablaufrohr 6 ansteigt, dann sperrt die Rückstauklappe 24 gegen eine Rückströmung in das Einlaufrohr 2, wobei mit steigendem Druck die Sperrwirkung gesteigert wird. Aus dem Überlaufsiphon 1 kann dann kein Wasser mehr abströmen. Ist die Rückstausituation beseitigt, dann öffnet jedoch der anstehende Strömungsdruck die Rückstauklappe 24 erneut.

Fig. 9 verdeutlicht einen Regenwassertank T, der in einer Tankwand 39 einen oberseitigen Tankdom 38 besitzt, in dessen Öffnung unter anderem der Überlaufsiphon 1 der Fig. 1 installiert ist, derart, dass, beispielsweise, der Auslauf 8 eine Öffnung 41 des Tankdoms 38 abgedichtet durchsetzt und an das nicht gezeigte Kanalisationssystem angeschlossen ist. In das Einlaufrohr 2 ist von oben ein Ende eines Rohrbogens 38 eingesteckt, der beispielsweise aus einer Filtervorrichtung 37 abströmendes Wasser in das Einlaufrohr 2 leitet, während gleichzeitig über die Erker 4 bei vollem Regenwassertank T Wasser in das Einlaufrohr 2 einströmen kann. Da aufgrund beispielsweise der vorgesehenen Filtervorrichtung 37 der verfügbare Einbauraum für den Überlaufsiphon 1 in Durchmesserrichtung begrenzt ist, ist es von Vorteil, wenn der Abstand Z zwischen der Achse des Einlaufrohres 2 und dem Außenumfang des Ablaufrohres 6 so gering wie möglich ist, um den Überlaufsiphon 1 trotz der integrierten Rückstauklappe 24 bequem im Tankdom 38 unterbringen zu können.

Die Ausführungsformen des Überlaufsiphons 1 der Fig. 6 und 7 unterscheiden sich von der vorbeschriebenen Ausführungsform dadurch, dass die Rückstauklappe 24' mit dem Einbauteil 17 im Ablaufrohr 6 direkt vor der Abzweigung des Auslaufes 8 positioniert ist.

In Fig. 6 ist die Montieröffnung mit dem Deckel 12 fluchtend mit der Achse des hier kreisrunden Ablaufrohres 6 und oben vorgesehen. Der Einbauteil 17 weist den Rohrstutzen 18' auf, dessen oberes Ende als Dichtsitz 30' abgeschrägt ist und an dem die Rückstauklappe 24' an der zum Einlaufrohr 2 weisenden Seite schwenkbar gelagert ist. Die Rückstauklappe 24' hat als Option wannenförmige Gestalt mit einer zum Auslauf 8 weisenden konkaven Wannenhohlseite, so dass sich darin Wasser sammeln kann und die Schließwirkung unterstützt. Der Dichtsitz 30' ist ebenfalls schräg und somit elliptisch, so dass, zweckmäßig, die Rückstauklappe 24' elliptische Form hat. Der Rohrstutzen 18' ist in der hier vertikal orientierten Fassung 29' mit einer Lippendichtung 34 fixiert und abgedichtet.

Fig. 7 verdeutlicht eine weitere Ausführungsform des Überlaufsiphons 1, bei dem der Deckel 12 auf der unten in Verlängerung des Ablaufrohres 6 angeordneten Montieröffnung 16 sitzt und mit der Achse des Ablaufrohres 6 fluchtet, wie auch der Einbauteil 17, der entsprechend Fig. 6 ausgebildet ist. Zum zusätzlichen Verspannen der Lippendichtung 29' kann in diese von der Montieröffnung 16 ein Spreizring 36 eingeschoben sein. In das Einlaufrohr 2 ist der Rohrbogen 35 eingesteckt, der beispielsweise von einer Filtervorrichtung, z.B. im Tankdom des Regenwassertanks T kommendes Wasser in das Einlaufrohr 2 leitet. Bei entsprechend ansteigendem Wasserspiegel fließt Wasser auch über die Erker 4 in das Einlaufrohr 2.

Alternativ könnte die Rückstauklappe 24' in Fig. 6,7 umgekehrte Form haben, d. h., zum Auslauf 8 hin einen konvex gewölbten Rücken. Sie könnte auch eben sein, wie in Fig. 2.

In den Ausführungsformen der Fig. 6 und 7 könnten die in Durchmesserrichtung eines Tankdoms gesehenen Abmessungen des Überlaufsiphons 1 reduziert werden, indem die Querschnitte von Einlaufrohr und Ablaufrohr 2, 6, wie z.B. in Fig. 8, oval oder rechteckig gestaltet werden, wobei dann der Einbauteil 18 und die Rückstauklappe 24' entsprechend geformt wären.

## Patentansprüche

1. Überlaufsiphon (1), insbesondere für einen Regenwassertank (T), mit im Wesentlichen parallelen und vertikalen Einlauf- und Ablaufrohren (2, 6) vorbestimmter Nennweite, die unterseitig über einen U-Bogen (10) verbunden sind, wobei vom am oberen Ende verschlossenen Ablaufrohr (6) ein im Wesentlichen horizontaler Auslauf (8) abzweigt, **dadurch gekennzeichnet, dass** in den Überlaufsiphon (1) eine in Strömungsrichtung vom Ablaufrohr (6) zum Einlaufrohr (2) selbsttätig sperrende Rückstauklappe (24') integriert ist.

2. Überlaufsiphon nach Anspruch 1, **dadurch gekennzeichnet, dass** der Überlaufsiphon (1) eine, vorzugsweise durch einen abnehmbaren Deckel (12), verschließbare Montieröffnung (16) für die Rückstauklappe (24) aufweist, die Rückstauklappe (24) schwenkbar an einem Einbauteil (17) mit einem Dichtsitz (30) für die Rückstauklappe (24) angebracht, und im Überlaufsiphon (1) eine mit der Montieröffnung (16) fluchtende Fassung (29) zum dichten Einsetzen des Einbauteils (17) vorgesehen ist.

3. Überlaufsiphon nach Anspruch 2, **dadurch gekennzeichnet, dass** die Rückstauklappe (24) im U-Bogen (10) und die Fassung (29) sowie die Montieröffnung (16) in etwa horizontal angeordnet sind.

4. Überlaufsiphon nach Anspruch 2, **dadurch gekennzeichnet, dass** die Rückstauklappe (24') im Ablaufrohr (6) und die Fassung (29) sowie die Montieröffnung (16) in etwa vertikal angeordnet sind, wobei, vorzugsweise, die Montieröffnung oben und/oder unten am Ablaufrohr (6) vorgesehen ist.

5. Überlaufsiphon nach Anspruch 2, **dadurch gekennzeichnet, dass** zumindest das Ablaufrohr (6), vorzugsweise auch das Einlaufrohr (2), zumindest über einen Dom-Einpassabschnitt (7, 5) einen annähernd ovalen oder rechteckigen Rohrquerschnitt zumindest entsprechend der Nennweite aufweisen, dessen längere Oval-Achse (X) zur Achse (Y) des Auslaufs (8) im Wesentlichen senkrecht ist.

6. Überlaufsiphon nach Anspruch 3, **dadurch gekennzeichnet, dass** der Einbauteil (17) einen Rohrstutzen (18), vorzugsweise mit einer zur Montieröffnung (16) weisenden Aufweitung (20), aufweist, dass der Dichtsitz (30), vorzugsweise, in etwa kreisrund und senkrecht zur Achse des Rohrstutzens (18) ist, und dass die Rückstauklappe (24) in Montierlage des Einbauteils (17) im Überlaufsiphon (1) unten am Rohrstutzen (18) schwenkbar gelagert ist.

7. Überlaufsiphon nach Anspruch 6, **dadurch gekennzeichnet, dass** der Rohrstutzen (18) dichtungsfrei durch einen Schrumpfsitz in der Fassung (29) festgelegt ist, vorzugsweise durch Montage des Einbauteils 17 in der Fassung (29) des erwärmten oder produktionsbedingt restwarmen Überlaufsiphons (1).

8. Überlaufsiphon nach wenigstens einem der vorhergehenden Ansprüche, **dadurch gekennzeichnet, dass** die Rückstauklappe (24) eben und kreisrund ist und auf der Sperrseite mindestens einen Dorn (27) aufweist, der, ausgehend von der Schwenkachse (26) der Rückstauklappe (24) jenseits der Mitte der Rückstauklappe positioniert ist, und dass an der Rückstauklappe (24) wenigstens ein Auftriebskörper (28) montiert ist, vorzugsweise ein auf den Dorn auf der Sperrseite aufgesteckter Styroporblock.

9. Überlaufsiphon nach Anspruch 4 oder 6, **dadurch gekennzeichnet, dass** zwischen der Fassung (29) und dem Rohrstutzen (18) wenigstens eine Dichtung vorgesehen ist.

10. Überlaufsiphon nach Anspruch 4, **dadurch gekennzeichnet, dass** der Einbauteil (17) einen gerade durchgehenden Rohrstutzen (18') mit gegenüber der Achse des Rohrstutzens (18') abgeschrägtem, den Dichtsitz (30') bildenden Ende aufweist, dass die Rückstauklappe (24') oval und in Montierlage des Einbauteils an der zum Einlaufrohr (2) weisenden Seite des Rohrstutzens (18') schwenkbar gelagert ist, und dass am in der Fassung (29) fixierten, dem Dichtsitz (30') abgewandten Ende des Rohrstutzens (18') eine Lippendichtung (34) montiert und vorzugsweise, mittels eines eingeschobenen Spreizringes (36) verspannt ist.

11. Überlaufsiphon nach Anspruch 6, **dadurch gekennzeichnet, dass** am unteren Ende des Ablaufrohrs (6), vorzugsweise angrenzend an den ovalen Dom-Einpassabschnitt (7), ein gegenüber der Außenkontur des Ablaufrohres (6) vorspringender Bewegungsraum (9) für eine Pendelbewegung der Rückstauklappe (24) vorgesehen ist.

12. Überlaufsiphon nach Anspruch 10, **dadurch gekennzeichnet, dass** die Rückstauklappe (24') wannenförmig ausgebildet ist, vorzugsweise mit zur Sperrseite weisender konkaver Wannenhohlseite.

13. Überlaufsiphon nach wenigstens einem der vorherigen Ansprüche, **dadurch gekennzeichnet, dass** am Dichtsitz (30') und/oder am Außenrand der Rückstauklappe (24') eine Dichtung vorgesehen ist, vorzugsweise ein im Querschnitt C-förmiger Dichtungsring (32).

14. Regenwassertank (T) mit einem Tankdom (38) und im Tankdom (38) montiertem Überlaufsiphon (1), der im Wesentlichen zueinander parallel und vertikal ein Einlaufrohr (2) und ein Ablaufrohr (6) aufweist, die über einen unten liegenden U-Bogen (10) verbunden sind, wobei vom oberseitig verschlossenen Ablaufrohr (6) ein im Wesentlichen horizontaler Kanal-Auslauf (8) abzweigt und das Einlaufrohr (2) gegebenenfalls an einen Filter (37) angeschlossen ist, **dadurch gekennzeichnet, dass** in dem Überlaufsiphon (1) im Inneren des Tankdoms (38) zwischen dem Einlaufrohr (2) und dem Kanal-Auslauf (8) eine in Strömungsrichtung zum Einlaufrohr (2) selbsttätig sperrende Rückstauklappe (24) integriert ist.

15. Regenwassertank nach Anspruch 14, **dadurch gekennzeichnet, dass** die Rückstauklappe (24) im U-Bogen (10) installiert ist und zumindest das Ablaufrohr (6), vorzugsweise auch das Einlaufrohr (2), in einem in Hochrichtung begrenzten Tankdom-Einpassabschnitt (7, 5) einen annähernd ovalen oder rechteckigen Querschnitt mit senkrecht zur Achse (Y) des Kanalablaufs (8) orientierter längerer Ovalachse (X) aufweist, und dass zwischen der Achse des Einlaufrohrs (2) und der Außenseite des ovalen Querschnitts des Ablaufrohres (6) im Tankdom-Einpassabschnitt (7) ein Horizontalabstand (Z) vorgesehen ist, der in etwa nur dem 1,6-fachen der Nennweite im Dichtsitz (30) entspricht.

## Geänderte Patentansprüche

### Geänderte Patentansprüche gemäss Regel 137(2) EPÜ.

1. Überlaufsiphon (1), insbesondere für einen Regenwassertank (T), mit im Wesentlichen parallelen und vertikalen Einlauf- und Ablaufrohren (2, 6) vorbestimmter Nennweite, die unterseitig über einen U-Bogen (10) verbunden sind, wobei vom am oberen Ende verschlossenen Ablaufrohr (6) ein im Wesentlichen horizontaler Auslauf (8) abzweigt und in den Überlaufsiphon (1) eine in Strömungsrichtung vom Ablaufrohr (6) zum Einlaufrohr (2) von sich aus sperrende Rückstauklappe (24, 24') integriert ist, **dadurch gekennzeichnet, dass** der Überlaufsiphon (1) eine verschließbare Montieröffnung (16) für die Rückstauklappe (24) aufweist, die Rückstauklappe (24) schwenkbar an einem Einbauteil (17) mit einem Dichtsitz (30) für die Rückstauklappe (24; 24') angebracht, und im Überlaufsiphon (1) eine mit der Montieröffnung (16) fluchtende Fassung (29) zum dichten Einsetzen des Einbauteils (17) vorgesehen ist.

2. Überlaufsiphon nach Anspruch 1, **dadurch gekennzeichnet, dass** die Montieröffnung (16) durch einen abnehmbaren Deckel (12) verschließbar ist.

3. Überlaufsiphon nach Anspruch 1, **dadurch gekennzeichnet, dass** die Rückstauklappe (24) im U-Bogen (10) und die Fassung (29) sowie die Montieröffnung (16) in etwa horizontal angeordnet sind.

4. Überlaufsiphon nach Anspruch 1, **dadurch gekennzeichnet, dass** die Rückstauklappe (24') im Ablaufrohr (6) und die Fassung (29) sowie die Montieröffnung (16) in etwa vertikal angeordnet sind, wobei, vorzugsweise, die Montieröffnung oben und/oder unten am Ablaufrohr (6) vorgesehen ist.

5. Überlaufsiphon nach Anspruch 1, **dadurch gekennzeichnet, dass** zumindest das Ablaufrohr (6), vorzugsweise auch das Einlaufrohr (2), zumindest über einen Dom-Einpassabschnitt (7, 5) einen annähernd ovalen oder rechteckigen Rohrquerschnitt zumindest entsprechend der Nennweite aufweisen, dessen längere Oval-Achse (X) zur Achse (Y) des Auslaufs (8) im Wesentlichen senkrecht ist.

6. Überlaufsiphon nach Anspruch 1, **dadurch gekennzeichnet, dass** der Einbauteil (17) einen Rohrstutzen (18), vorzugsweise mit einer zur Montieröffnung (16) weisenden Aufweitung (20), aufweist, dass der Dichtsitz (30), vorzugsweise, in etwa kreisrund und senkrecht zur Achse des Rohrstutzens (18) ist, und dass die Rückstauklappe (24) in Montierlage des Einbauteils (17) im Überlaufsiphon (1) unten am Rohrstutzen (18) schwenkbar gelagert ist.

7. Überlaufsiphon nach Anspruch 6, **dadurch gekennzeichnet, dass** der Rohrstutzen (18) dichtungsfrei durch einen Schrumpfsitz in der Fassung (29) festgelegt ist, vorzugsweise durch Montage des Einbauteils 17 in der Fassung (29) des erwärmten oder produktionsbedingt restwarmen Überlaufsiphons (1).

8. Überlaufsiphon nach wenigstens einem der vorhergehenden Ansprüche, **dadurch gekennzeichnet, dass** die Rückstauklappe (24) eben und kreisrund ist und auf der Sperrseite mindestens einen Dorn (27) aufweist, der, ausgehend von der Schwenkachse (26) der Rückstauklappe (24) jenseits der Mitte der Rückstauklappe positioniert ist, und dass an der Rückstauklappe (24) wenigstens ein Auftriebskörper (28) montiert ist, vorzugsweise ein auf den Dorn auf der Sperrseite aufgesteckter Styroporblock.

9. Überlaufsiphon nach Anspruch 4 oder 6, **dadurch gekennzeichnet, dass** zwischen der Fassung (29) und dem Rohrstutzen (18) wenigstens eine Dichtung vorgesehen ist.

10. Überlaufsiphon nach Anspruch 4, **dadurch gekennzeichnet, dass** der Einbauteil (17) einen gerade durchgehenden Rohrstutzen (18') mit gegenüber der Achse des Rohrstutzens (18') abgeschrägtem, den Dichtsitz (30') bildenden Ende aufweist, dass die Rückstauklappe (24') oval und in Montierlage des Einbauteils an der zum Einlaufrohr (2) weisenden Seite des Rohrstutzens (18') schwenkbar gelagert ist, und dass am in der Fassung (29) fixierten, dem Dichtsitz (30') abgewandten Ende des Rohrstutzens (18') eine Lippendichtung (34) montiert und vorzugsweise, mittels eines eingeschobenen Spreizringes (36) verspannt ist.

11. Überlaufsiphon nach Anspruch 6, **dadurch gekennzeichnet, dass** am unteren Ende des Ablaufrohrs (6), vorzugsweise angrenzend an den ovalen Dom-Einpassabschnitt (7), ein gegenüber der Außenkontur des Ablaufrohres (6) vorspringender Bewegungsraum (9) für eine Pendelbewegung der Rückstauklappe (24) vorgesehen ist.

12. Überlaufsiphon nach Anspruch 10, **dadurch gekennzeichnet, dass** die Rückstauklappe (24') wannenförmig ausgebildet ist, vorzugsweise mit zur Sperrseite weisender konkaver Wannenhohlseite.

13. Überlaufsiphon nach wenigstens einem der vorherigen Ansprüche, **dadurch gekennzeichnet, dass** am Dichtsitz (30') und/oder am Außenrand der Rückstauklappe (24') eine Dichtung vorgesehen ist, vorzugsweise ein im Querschnitt C-förmiger Dichtungsring (32).

14. Regenwassertank (T) mit einem Tankdom (38) und im Tankdom (38) montiertem Überlaufsiphon (1), der im Wesentlichen zueinander parallel und vertikal ein Einlaufrohr (2) und ein Ablaufrohr (6) aufweist, die über einen unten liegenden U-Bogen (10) verbunden sind, wobei vom oberseitig verschlossenen Ablaufrohr (6) ein im Wesentlichen horizontaler KanalAuslauf (8) abzweigt und das Einlaufrohr (2) gegebenenfalls an einen Filter (37) angeschlossen ist, **dadurch gekennzeichnet, dass** in dem Überlaufsiphon (1) im Inneren des Tankdoms (38) zwischen dem Einlaufrohr (2) und dem Kanal-Auslauf (8) eine in Strömungsrichtung zum Einlaufrohr (2) selbsttätig sperrende Rückstauklappe (24, 24') integriert ist, und dass der Überlaufsiphon (1) eine verschließbare Montieröffnung (16) für die Rückstauklappe (24, 24') aufweist, die Rückstauklappe (24, 24') schwenkbar an einem Einbauteil (17) mit einem Dichtsitz (30) für die Rückstauklappe (24) angebracht, und im Überlaufsiphon (1) eine mit der Montieröffnung (16) fluchtende Fassung (29) zum dichten Einsetzen des Einbauteils (17) vorgesehen ist.

15. Regenwassertank nach Anspruch 14, **dadurch gekennzeichnet, dass** die Rückstauklappe (24) im U-Bogen (10) installiert ist und zumindest das Ablaufrohr (6), vorzugsweise auch das Einlaufrohr (2), in einem in Hochrichtung begrenzten Tankdom-Einpassabschnitt (7, 5) einen annähernd ovalen oder rechteckigen Querschnitt mit senkrecht zur Achse (Y) des Kanalablaufs (8) orientierter längerer Ovalachse (X) aufweist, und dass zwischen der Achse des Einlaufrohrs (2) und der Außenseite des ovalen Querschnitts des Ablaufrohres (6) im Tankdom-Einpassabschnitt (7) ein Horizontalabstand (Z) vorgesehen ist, der in etwa nur dem 1,6-fachen der Nennweite im Dichtsitz (30) entspricht.
